# FASCICULE DE BREVET EUROPEEN

(11) **EP 1 691 114 B1**
(45) Date de publication et mention de la délivrance du brevet: **27.02.2008**
(21) Numéro de dépôt: 05292555.9
(22) Date de dépôt: 02.12.2005
(51) Int. Cl.: F16K 1/22

(54) **Robinet à blocage du papillon**
Klappenventil mit Blockiereinrichtung
Butterfly valve with locking mechanism

(30) Priorité: 15.02.2005 FR 0501502
(43) Date de publication de la demande: 16.08.2006
(73) Titulaire: KSB S.A.S, 92230 Gennevilliers (FR)
(72) Inventeur: Larrieu, Lucien, 64220 St. Jean de Port (FR)
(74) Mandataire: Eidelsberg, Victor Albert

(56) Documents cités:
- US-A- 4 809 948
- PATENT ABSTRACTS OF JAPAN vol. 2003, no. 12, 5 décembre 2003 (2003-12-05) & JP 2003 240155 A (TOMOE TECH RES CO), 27 août 2003 (2003-08-27)
- PATENT ABSTRACTS OF JAPAN vol. 2003, no. 01, 14 janvier 2003 (2003-01-14) & JP 2002 250467 A (KITZ CORP), 6 septembre 2002 (2002-09-06)

## Description

La présente invention se rapporte à des robinets quart de tour dits à "obturateur décalé" ou à "papillon décalé".

Dans un robinet on appelle arbre, l'élément menant pourvu à son extrémité externe d'un moyen de manoeuvre tel que carré de manoeuvre pour entraîner en rotation. Le rôle de l'arbre est d'entraîner en rotation le papillon (mouvement de ¼ de tour), il assure, en outre, une deuxième fonction principale : celle de support du papillon quand celui-ci est fermé. A l'opposé de l'arbre, on trouve l'axe qui joue un rôle identique à celui de l'arbre en terme de support de papillon, en revanche l'axe n'est pas menant, il est lié en rotation au papillon.

Le papillon obture partiellement ou totalement la canalisation. En position ouverte, il est placé dans l'écoulement. L'axe de rotation étant décalé par rapport au centre de poussée de la pression, le papillon placé au voisinage de la position fermée tend à s'ouvrir ou à se fermer sous la seule action de la pression du fluide et parfois de son poids propre.

Dans un robinet à papillon décalé, le poids propre de l'équipage mobile ainsi que la pression exercent sur l'équipage mobile des couples qui tendent à le faire tourner soit vers la fermeture, soit vers l'ouverture. Les robinets de grands diamètres sont, le plus souvent, montés avec la ligne d'arbre horizontale, ce qui permet d'évacuer lors de l'ouverture les débris divers qui ont pu s'accumuler par gravité en partie basse de la tuyauterie. Dans ce cas, le poids de l'équipage mobile exerce lui-même un couple moteur.

On suppose que l'actionneur d'un robinet monté à axe horizontal soit tombé en panne alors que le robinet est en position intermédiaire entre ouverture et fermeture et que le robinet doive être remplacé. Sans bloqueur, le papillon exerce un couple moteur qui tend à faire tourner le papillon jusqu'à amener le centre de gravité de l'équipage mobile à l'aplomb de l'axe de rotation. Il est donc difficile de dégager l'actionneur du robinet en présence de ce couple moteur, car les goujons de liaison vont frotter dans les trous de la platine du robinet au début de la phase de désaccouplement et lorsque ces goujons seront juste dégagés de ces trous, l'actionneur dont le couple de réaction vient d'être supprimé va tourner brutalement, présentant ainsi un risque important pour les opérateurs.

On connaît déjà un dispositif amovible fixé, d'une part, à la platine du corps du robinet et, d'autre part, à l'actionneur, qui a un arbre de transmission intermédiaire entre l'arbre moteur et l'actionneur. Il est prévu des éléments de blocage en rotation de l'arbre intermédiaire. Cette pièce supplémentaire du robinet augmente les jeux de la chaîne cinématique, augmente la place dont doit disposer le robinet et nécessite pour son montage une double fixation.

US 4 809 948 décrit quant à lui un dispositif de blocage de l'arbre d'une vanne papillon comprenant un système de goupille venant verrouiller radialement l'arbre.

L'invention vise un robinet du type mentionné ci-dessus, dont on peut démonter l'actionneur sans danger, plus facilement que jusqu'ici avec moins d'opérations de boulonnage, qui prend moins de place que le moyen de blocage utilisé jusqu'ici et qui ne nécessite pas de prévoir pour le blocage une pièce supplémentaire à celles nécessaires au fonctionnement du robinet.

L'invention a donc pour objet un robinet comprenant un corps, un papillon, dont un moignon est solidaire en rotation d'un arbre moteur porté par le corps et dont le moignon diamétralement opposé est solidaire en rotation d'un arbre mené porté par le corps. L'axe du papillon est décalé par rapport à l'axe commun des deux arbres. Un chapeau obture une chambre ménagée dans le corps pour l'arbre mené. Un moyen de blocage du papillon en rotation est constitué par le fait que l'une des faces du chapeau comporte un crabot qui, lorsque le chapeau est monté alors que cette face est tournée vers l'arbre mené, est conjugué avec blocage en rotation à un logement du bout de l'arbre mené. L'autre face du chapeau ne comporte pas un crabot de ce genre. Le chapeau peut être fixé au choix en ayant l'une ou l'autre des faces tournée vers le côté de l'arbre mené.

En fonctionnement normal, le chapeau est monté alors que le crabot est tourné vers l'extérieur. Lorsque l'on doit démonter l'actionneur, qui est solidaire en rotation de l'arbre moteur, on démonte le chapeau et on le remonte en mettant sa face portant le crabot conjugué en prise avec le logement du bout de l'arbre mené. La coopération du crabot et du logement immobilise le papillon, qui ne peut plus tourner inopinément alors que l'opérateur est en train de démonter l'actionneur. L'opérateur peut ensuite démonter l'actionneur sans danger.

Il va de soi qu'au lieu du crabot et du logement on peut utiliser tout moyen, notamment à complémentarité de formes, qui est susceptible d'immobiliser l'arbre mené et donc le papillon par le chapeau.

Aux dessins annexés, donnés uniquement à titre d'exemple :

la figure 1 est une vue en coupe d'un robinet suivant l'invention et

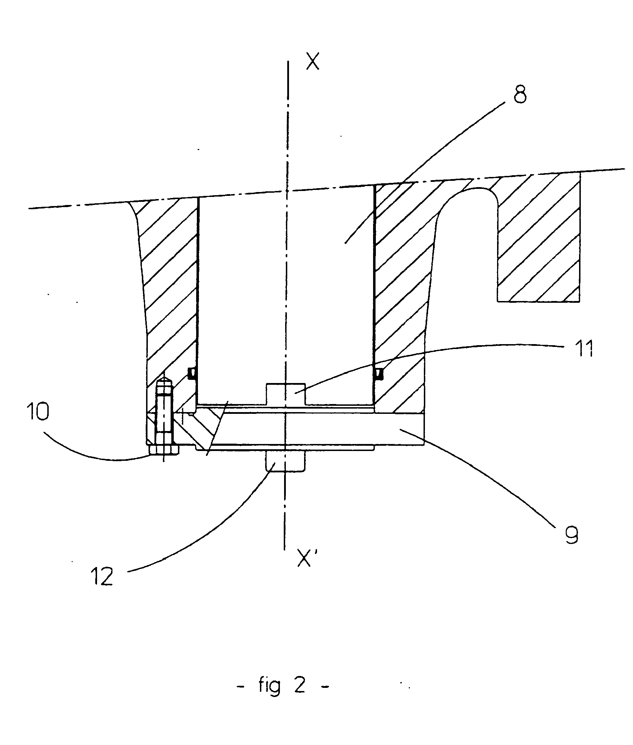

la figure 2 est une vue de détail de la partie proche du chapeau.

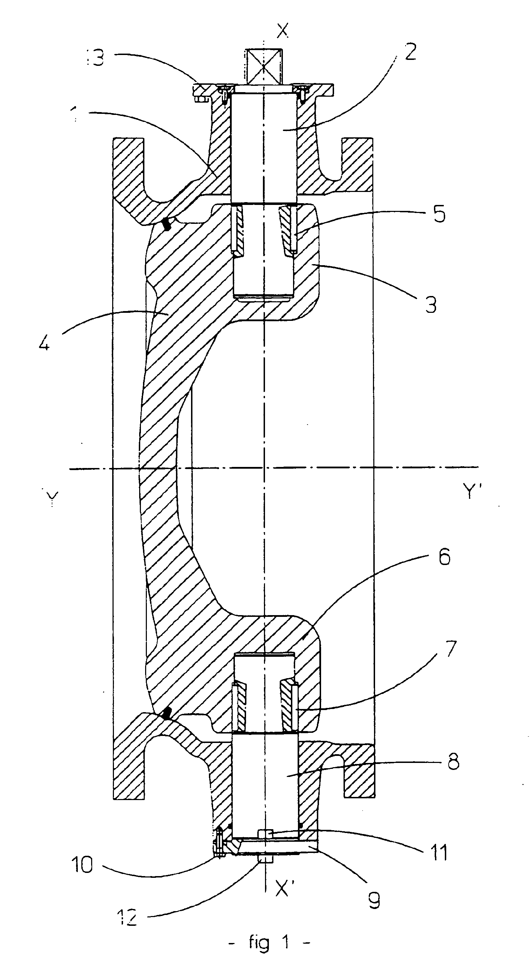

Le robinet représenté à la figure 1 comprend un corps 1 portant par des paliers un arbre 2 moteur. L'arbre 2 menant est solidaire en rotation d'un moignon 3 d'un papillon 4 par l'intermédiaire de clavettes 5. De la même façon, le moignon 6 diamétralement opposé au moignon 3 du papillon 4 est claveté par des clavettes 7 à un arbre 8 mené ayant le même axe X, X' que l'arbre 2 moteur. La chambre destinée à l'arbre 8 mené dans le corps 1 est fermée par un chapeau 9 pouvant être fixé par des éléments 10 de fixation sur le corps pour fermer la chambre.

L'axe Y, Y' du papillon 4 ne coupe pas l'axe X, X'. Il est décalé par rapport à celui-ci en sorte que le papillon abandonné à lui-même a tendance, sous l'effet de son propre poids, à amener son centre de gravité en dessous de l'axe X, X' et donc à tourner. Le papillon 4 est aussi monté excentré par rapport à l'axe X, X', ce qui contribue aussi à son mouvement de soi-même.

Le bout de l'arbre 8 mené comporte un logement 11 débouchant vers l'extérieur. La face du chapeau 9, tournée vers l'extérieur, lorsque le robinet est en fonctionnement normal, porte un crabot 12. Lorsque l'on démonte le chapeau 9 et lorsqu'on le retourne, le crabot 12 vient dans le logement 11 à complémentarité de formes et empêche ainsi par sa forme carrée l'arbre 8 de tourner. En cette position, un opérateur peut démonter un actionneur monté sur une platine 13 du corps sans danger d'être heurté brutalement par la rotation rapide de l'arbre sous l'effet de balourd du papillon.

## Revendications

1. Robinet comprenant un corps (1), un papillon (4) dont un moignon (3) est solidaire en rotation d'un arbre (2) moteur porté par le corps (1) et dont le moignon (6), diamétralement opposé et solidaire en rotation d'un arbre (8) mené porté par le corps (1), l'axe (Y, Y') du papillon étant décalé par rapport à l'axe (X, X') commun des deux arbres (2, 8) et le papillon (4) étant excentré par rapport à cet axe (X, X'), un chapeau (9) d'obturation d'une chambre ménagée dans le corps (1) pour l'arbre (8) mené et un moyen de blocage du papillon (4) en rotation, **caractérisé en ce que** le moyen de blocage est constitué par le fait que l'une des faces du chapeau (9) comporte un crabot (12) qui, lorsque le chapeau (9) est monté alors que cette face est tournée vers l'arbre (8) mené, est conjugue avec blocage en rotation à un logement (11) du bout de l'arbre (8), tandis que l'autre face n'en comporte pas, et le chapeau (9) peut être fixé au choix en ayant l'une ou l'autre des faces tournée vers le côté de l'arbre (8) mené.

2. Procédé de démontage de l'actionneur d'un robinet suivant la revendication 1, l'actionneur étant solidaire en rotation de l'arbre moteur, **caractérisé en ce que** l'on démonte le chapeau et/ou le remonte en mettant sa face portant le crabot conjugué en prise avec le logement du bout de l'arbre mené et on démonte l'actionneur.

## Claims

1. A tap comprising a body (1) and a butterfly member (4), the butterfly member (4) having a stump (3) secured in rotation with a drive shaft (2) carried by the body (1) and a stump (6), diametrically opposite the stump (3), which is secured in rotation with a driven shaft (8) carried by the body (1), the axis (Y, Y') of the butterfly member (4) being offset relative to the common axis (X, X') of the two shafts (2, 8) and the butterfly member (4) being off-centre relative to this axis (X, X'), the tap further comprising a cap (9), for blocking a chamber provided in the body (1) for the driven shaft (8), and a locking means for locking the butterfly member (4) against rotation, **characterised in that** the locking means comprises a pawl (12) on one of two sides of the cap (9) and the cap (9) may be set either way having one or other of the two sides facing the driven shaft (8), wherein when the side of the cap (9) having the pawl (12) is turned towards the driven shaft (8) the pawl engages a housing (11) to lock the driven shaft (8) against rotation.

2. A method for disassembling the actuator of a tap according to claim 1, the actuator being secured in rotation with the drive shaft, **characterised in that** the cap is disassembled and/or re-assembled by bringing its surface carrying the conjugate pawl to engage with the housing of the end of the driven shaft and the actuator is disassembled.

## Patentansprüche

1. Ventil enthaltend einen Körper (1), eine Ventilklappe (4), deren einer Ansatz (3) drehfest mit einer vom Körper (1) getragenen Antriebswelle (2) verbunden ist und deren diametral gegenüberliegender Ansatz (6) mit einer vom Körper (1) getragenen angetriebenen Welle (8) drehfest verbunden ist, wobei die Achse (Y,Y') der Ventilklappe (4) im Verhältnis zur gemeinsamen Achse (X,X') der beiden Wellen (2,8) versetzt ist und die Ventilklappe (4) im Verhältnis zu dieser Achse (X,X') exzentrisch angeordnet ist, eine Abdeckung (9) zum Verschluss einer im Köper (1) für die angetriebene Welle (8) eingelassenen Kammer und ein Mittel zur Rotationsblockade der Ventilklappe (4), **dadurch gekennzeichnet, dass** das Blockademittel gebildet wird, indem eine der Seiten der Abdeckung (9) eine Klaue (12) aufweist, welche bei einer Montage der Abdeckung (9) mit Ausrichtung dieser Seite zur angetriebenen Welle (8) mit Rotationsblockade mit einer Aufnahme (11) am Ende der Welle (8) verbunden ist, während die andere Seite keine solche Klaue aufweist und die Abdeckung (9) wahlweise so montiert werden kann, dass die eine oder die andere der Seiten zur angetriebenen Welle (8) gerichtet ist.

2. Verfahren zum Ausbau des Betätigers eines Ventils nach Anspruch 1, bei dem der Betätiger drehfest mit der Antriebsachse verbunden ist, **dadurch gekennzeichnet , dass** man die Abdeckung ausbaut und/oder wieder einbaut, indem man die Seite mit der Klaue in Eingriff mit der Aufnahme am Ende der angetriebenen Welle bringt und den Betätiger ausbaut.
